# EUROPEAN PATENT APPLICATION

(11) **EP 4 215 504 A1**
(43) Date of publication of application: **26.07.2023**
(21) Application number: 22152499.4
(22) Date of filing: 20.01.2022
(51) Int. Cl.: C04B 24/26, C04B 28/02, C04B 28/14

(54) **METHOD FOR MITIGATING THE EFFECT OF CLAY IN MINERAL CONSTRUCTION MATERIALS**

(71) Applicant: Sika Technology AG, 6340 Baar (CH)
(72) Inventor: Unseld, Johannes, 38678 Clausthal-Zellerfeld (DE); Dimitrakopoulou, Ariadni, 69126 Heidelberg (DE); Müller, Thomas, 69207 Sandhausen (DE); Heller, Thomas, 74909 Meckesheim (DE); Honert, Dieter, 69234 Dielheim (DE)
(74) Representative: Sika Patent Attorneys

(57) **Abstract**

The present invention relates to a method for mitigating the effect of swelling clays in mineral construction materials, especially materials based on gypsum or cement binders, comprising at least one dispersant for the mineral binder, said method comprising a step of adding a copolymerized polyvinyl alcohol to said mineral construction material. The present invention also relates to a mineral construction material comprising at least one mineral binder, swelling clay, at least one dispersant for the mineral binder, and a copolymerized polyvinyl alcohol.

## Description

### Technical Field

The present invention relates to a method for mitigating the effect of clay minerals in mineral construction materials, especially materials based on gypsum or cement binders, comprising at least one dispersant for the mineral binder, said method comprising a step of adding a copolymerized polyvinyl alcohol to said mineral construction material.

### Background of the invention

In recent years high purity sand for the manufacture of construction materials has become increasingly scarce. For example, especially for environmental reasons it is less and less possible to extract river sand which has been widely used for this purpose in the past. Thus, sands of lower quality or soil must be used in the manufacture of construction material. One problem which is frequently encountered when sands of lower quality or soil is used is the content of clay minerals in such sands or soil. Clay minerals, which can be of the swelling or non-swelling type, often have a negative influence on the quality of the construction materials produced therefrom, especially such clay minerals lead to reduced flow and workability of the construction material which is equivalent to an increased water demand. Additionally, it has been found that swelling clays present in some natural sources of gypsum tend to increase the water demand of a gypsum slurry which ultimately forms a plaster by forming a flocculated structure in the presence of calcium ions.

Also, the effectiveness of common dispersants used in mineral construction materials is reduced when swelling and/or non-swelling clay minerals are present. Dispersants or superplasticizers are used in the building industry as plasticizers or water-reducing agents for mineral construction materials, such as for example concrete, cement mortar, plaster, or lime mortar. The dispersants are generally organic polymers which are added to the mixing water or admixed with the binder compositions in solid form. In this way, it is advantageously possible to alter both, the consistency of the mineral construction material during processing and its properties in the hardened state. A particularly well-known class of dispersants for mineral construction materials, especially materials based on gypsum or cement binders, are comb polymers of the type polycarboxylate esters or polycarboxylate ethers (PCE). However, PCE type dispersants have a particular high interaction with swelling and non-swelling clays and their dispersing effect on mineral binders is often significantly reduced when clay minerals are present. Consequently, the flowability of mortar or concrete with a given PCE dosage is significantly reduced if clay minerals are present. Concrete producers are typically addressing this problem either by using a higher PCE dosage to compensate the loss of PCE performance, or by adding special additives being able to reduce or block the influence of clay minerals, i.e. so-called clay mitigation agents. Although increasing the PCE dosage is in principle a straightforward solution, it is economically inefficient and can be especially problematic if the clay content in a given mix design is fluctuating. In this case, the concrete producer is constantly forced to adjust the PCE dosage to keep a certain flowability, which is highly time-consuming.

Therefore, various solutions have been proposed to address these problems and especially the addition of certain admixtures has proven to be useful to mitigate the effects of swelling and non-swelling clays.

Admixtures often used for the mitigation of clay minerals are polycationic compounds such as described for example in WO 2006/032785 or WO 2013/124003. The problem with such polycationic compounds can be that they are more difficult to produce and that noxious chemicals are needed for their manufacture.

Polyvinyl alcohol is a readily available polymer which does not have these drawbacks.

WO 1998/58887 proposes various additives to mitigate the negative influence of swelling clays in cementitious compositions. Among the additives disclosed therein is regular polyvinyl alcohol.

EP 2048123 discloses the use of polyvinyl alcohol to mitigate the effect of swelling and non-swelling bentonites in concrete mixtures.

EP 2542511 teaches the use of organic polymer of low cationic charge density, which can be polyvinyl alcohols, to mitigate the effect of non-swelling clays in mineral compositions for the preparation of hydraulic compositions.

US 2011/031652 discloses that partially hydrolyzed and optionally silanized polyvinyl alcohol may be used together with ethoxylated comb-copolymers of acrylic acid to mitigate the effect of swelling bentonite in gypsum slurries.

However, the solutions proposed so far are often not efficient enough. Especially, the effectiveness of dispersants for mineral binders may still be reduced where swelling and/or non-swelling clays are present in mineral binder compositions. There exists therefore a need for admixtures which are easy to produce and are efficient in mitigating the effects of swelling and/or non-swelling clays on dispersants in mineral construction materials.

### Summary of the invention

It is an objective of the present invention to provide methods and materials to mitigate the effects of swelling and/or non-swelling clays on mineral construction materials, said mineral construction materials comprising at least one dispersant for mineral binders. Preferably, these methods and materials are easy to implement and/or easy to manufacture.

Surprisingly, it was found that copolymerized polyvinyl alcohols are particularly well suited for the mitigation of the effects of clay minerals on mineral construction materials, said mineral construction materials comprising at least one dispersant for mineral binders. Especially, the addition of copolymerized polyvinyl alcohols restores the effectiveness of dispersant for mineral binders in mineral construction materials comprising swelling clays. This effect is measurable as an increased workability of the mineral construction material comprising mineral binder, at least one dispersant, swelling clays and copolymerized polyvinyl alcohol as compared to the same mineral construction material not comprising the copolymerized polyvinyl alcohol.

It has also been surprisingly found that the addition of the copolymerized polyvinyl alcohol does not have significant additional impact on the workability of a mineral construction material comprising a dispersant for mineral binder but not comprising a swelling clay. In other words, the copolymerized polyvinyl alcohol only has an influence on the workability of a mineral construction material if swelling clay is present. This is a big advantage, since it is possible to dose the copolymerized polyvinyl alcohol to a mineral construction material before knowing if any clay mineral is present. Where no clay minerals, especially no swelling clays, are present, the addition will have no effect. Where clay minerals, especially swelling clays, are present, the addition will have the beneficial effect of mitigating the influence of the swelling clay on the mineral binder dispersant. A continuous quality in production can thus be easily ensured.

The objective of the present invention is therefore solved by a method and a mineral construction material as claimed in the independent claims. Preferred embodiments are subject of the dependent claims.

Without wishing to be bound by theory, the present inventors believe that clay minerals, especially swelling clays, present in mineral construction materials interfere with the action of dispersants for mineral binders, lowering the dose efficiency of such dispersants. The dispersants become preferentially adsorbed onto clay minerals, especially where the dispersants are highly charged. The copolymerized polyvinyl alcohol can preferentially adsorb onto clay minerals, thereby performing two functions:
1) to disperse the clay particles, which lowers the water demand very slightly, and
2) to block the sites on the clay particles which would otherwise be occupied by the dispersants, such blocking allowing the dispersant to perform its desired function of dispersing the mineral binder, which in turn results in a significant lowering of the water demand.

Additional objects and advantages of the invention will become apparent to those skilled in the art upon reference to the detailed description below.

### Ways for carrying out the invention

In a first aspect the present invention relates to a method for mitigating the effect of clay minerals in mineral construction materials, said mineral construction materials comprising at least one mineral binder, clay minerals, and at least one dispersant, said method comprising a step of adding a copolymerized polyvinyl alcohol to said mineral construction material.

According to preferred embodiments, clay minerals of the present invention comprise or consist of swelling clays.

The term "swelling clays" within the present context stands for clay minerals which expand and/or increase their volume when wetted by aqueous solutions or by water. Typically, swelling clays are layered silicate minerals and, more specific, phyllosilicate minerals based on tetrahedral MO₄ sheets (M = Si⁴⁺, Al³⁺) and octahedral M(O,OH)₆ sheets (M = Al³⁺, Mg²⁺, Fe^{2+/3+}, etc.). They differ from each other by their way of stacking the tetrahedral and octahedral sheets. The most common swelling clays are part of the 2:1 clay group. These are clays in which an octahedral sheet (O) is sandwiched between two tetrahedral sheets (T). Cations are present in the interlayer holding the layers together. In particular, the term "swelling clays" refers to minerals from the smectite group, especially to bentonite, montmorillonite, nontronite, beidellite, saponite, hectorite, sauconite, and mixtures thereof. Other swelling clays which are also encompassed in the present context are vermiculites. In many cases, clay minerals are not entirely pure and do not consist of only one type of clay mineral. Thus, the term "swelling clays" within the present context also encompasses mixtures of clay minerals which mixture expands and/or increases its volume when wetted by aqueous solutions or by water.

The term "non-swelling clays" stands in particular for clay minerals which do not expand and/or increase their volume when wetted by aqueous solutions or water. Typically, non-swelling layer-silicates are layered silicate minerals and, more specifically, phyllosilicate minerals based on tetrahedral MO₄ sheets (M = Si⁴⁺, Al³⁺) and octahedral M(O,OH)₆ sheets (M = Al³⁺, Mg²⁺, Fe^{2+/3+}, Ca²⁺, Ba²⁺, Mn^{2+/3+/4+}). They differ from each other by the order of stacking of tetrahedral and octahedral sheets. The most common non-swelling clays are part of the 1:1 clay group, the 2:1 clay group, and the 2:1:1 clay group. In particular, the term "non-swelling clays" refers to minerals selected from kaolinite, serpentine, micas, illite, glauconite, celadonite, phengite, palygorskite, sepiolite, chlorite, talc, pyrophyllite, and mixtures thereof. In many cases, clay minerals are not entirely pure and do not consist of only one type of clay mineral. Thus, the term "non-swelling clays" within the present context also encompasses mixtures of clay minerals which mixture does not expand and/or does not increase its volume when wetted by aqueous solutions or by water.

Preferably, within the present context, mixtures of clay minerals are based on swelling clays, i.e. the total content of swelling clays therein is bigger than the total content of non-swelling clays.

Weathering of rocks is an important natural process enhancing the formation of swelling and non-swelling clays. During the weathering process of the rocks, the clay minerals are mobilized and are subsequently often found in aggregates, especially in sand, as well as in other naturally occurring materials, such as e.g. gypsum.

The main source of clay minerals in mineral construction materials thus are aggregates, fillers, or binders. Within the present context, the main source of clay minerals, especially of swelling clays, typically are sands, rock flour, natural gypsum, and/or latent hydraulic materials and pozzolanes as defined below.

According to embodiments of the present invention the clay minerals consist to at least 10 w%, preferably at least 30 w%, more preferably at least 45 w%, still more preferably at least 70 w%, of montmorillonite, based on the total dry weight of the clay mineral.

Mineral construction materials within the present context are any materials dedicated for the use in construction and comprising at least one mineral binder and at least one dispersant for said mineral binder. Mineral construction materials within the present context may additionally comprise aggregates, fillers, and/or additives. Water may also be present in mineral construction materials. As such, mineral construction materials within the present context relate to dry, powdery materials as well as to wet, pasty to liquid, materials.

The term "mineral binder" within the present context relates to a binder selected from cements, calcium sulfate, lime, magnesia, alumina, geopolymers, latent hydraulic binders, and/or pozzolanes. The term "cements" encompasses Portland cements. Especially cements are as described in international standard EN 197, particularly are of type CEM I, CEM II, CEM III, CEM IV, and CEM V as described in standard EN 197-1, and/or are calcium aluminate cements as described in standard EN 14647, and/or are calcium sulphoaluminate cements. The term "calcium sulfate" is meant to encompass calcium sulfate in various forms, in particular calcium sulfate anhydrite, calcium sulfate α- and β- hemihydrate, calcium sulfate dihydrate, naturally occurring gypsum, as well as gypsum from industrial processes such as FGD gypsum or phosphogypsum. The term "lime" is meant to encompass natural hydraulic lime, formulated lime, hydraulic lime, and air lime as described in the standard EN 459-1:2015. The term "alumina" stands for aluminum oxides, aluminum hydroxides, and/or aluminum oxy-hydroxides such as gibbsite and boehmite, calcined or flash calcined alumina, alumina resulting from the Bayer process, hydratable alumina such as amorphous mesophase alumina and rho phase alumina. Pozzolanes and latent hydraulic materials preferably are selected from the group consisting of slag, clay, calcined clay, especially metakaolin, kiln dust, microsilica, fly ash, pyrogenic silica, precipitated silica, silica fume, zeolite, rice husk ash, burnt oil shale, and natural pozzolanes such as pumice, trass, and finely ground limestone.

According to embodiments of the present invention the mineral construction material is a material comprising calcium sulfate as the main mineral binder. This means that calcium sulfate is contained in the mineral construction material in an amount larger than any other mineral binder which might be additionally present. In particular, the mineral binder consists to at least 50 w%, preferably at least 66 w%, more preferably at least 90 w%, relative to the total dry weight of the mineral binder, of calcium sulfate. Any calcium sulfate anhydrite, calcium sulfate α- and β- hemihydrate, calcium sulfate dihydrate, and gypsum present is calculated for this weight amount.

According to embodiments of the present invention the mineral construction material is a material comprising cement as the main mineral binder. This means that cement is contained in the mineral construction material in an amount larger than any other mineral binder which might be additionally present. In particular, the mineral binder consists to at least 5 w%, preferably at least 20 w%, more preferably at least 40 w%, still more preferably at least 65 w%, especially at least 80 w%, relative to the total dry weight of the mineral binder, of cement. Any Portland cement, calcium aluminate cement, and calcium sulphoaluminate cement present are calculated for this weight amount.

The at least one dispersant is a dispersant for the mineral binder. Suitable dispersants for mineral binders are also known as plasticizers, superplasticizers, or water reducers. Suitable dispersants within the present context are selected from lignosulphonates, naphthalin sulfonates, sulfonated melamine formaldehyde resins, polyacrylates, polyarylated esters, and polycarboxylate ethers or esters. Especially preferably, the at least one dispersant is a comb polymer of the type polycarboxylate ether or ester, which are abbreviated throughout this invention as PCE.

The term "lignosulphonate" is used herein to refer to a salt composed of lignosulphonate anions and suitable cations and includes in particular the substances sodium lignosulphonate (CAS No. 8061-51-6), magnesium lignosulphonate (CAS No. 8061-54-9), and calcium lignosulphonate (CAS No. 8061-52-7). Lignosulphonates are formed as by-products of pulp production under the influence of sulfurous acid, which causes sulphonation and a certain degree of demethylation of the lignins. Like lignins, they are diverse in structure and composition. Methods for the isolation and purification of lignin sulphonates are familiar to those skilled in the art. Of course, mixtures of different lignosulphonates can be used in the context of the present invention, and the lignosulphonates can be in both liquid and/or solid form.

According to embodiments of the present invention the at least one dispersant is selected from comb polymers of the type polycarboxylate esters or polycarboxylate ethers (PCE).

PCE of the present invention comprise
(i) repeating units A of the general structure (I) 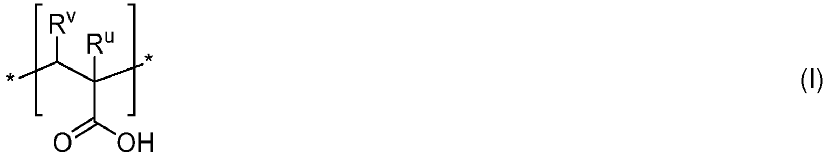 and
(ii) repeat units B of the general structure (II), 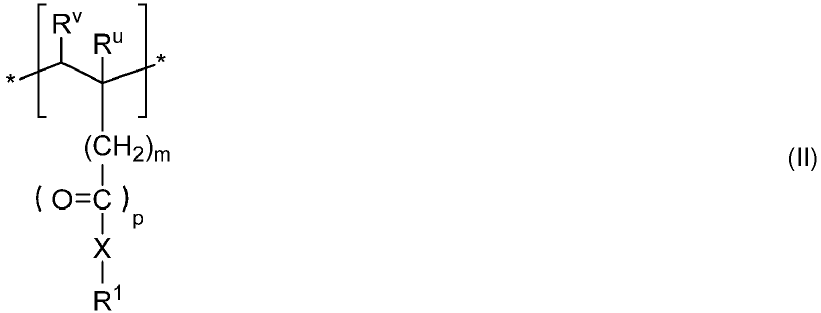 wherein
   each R^{u} independently represents hydrogen or a methyl group,
   each R^{v} independently represents hydrogen or COOM, wherein M independently is H, an alkali metal, or an alkaline earth metal,
   m = 0, 1, 2 or 3,
   p = 0 or 1,
   X independently of each other is O or NH,
   each R1 is independently -(CH₂)_{z}-[YO]ₙ-R⁴, where Y is a C₂ to C₄ alkylene and R⁴ is H, SO₃H, C₁ to C₂₀ alkyl, -cyclohexyl, -alkylaryl, or a -N(-Rⁱ)ⱼ-[(CH₂)_{z}-PO₃M]₃₋ⱼ, z = 0, 1, 2, 3, or 4 n = 2 - 350, j = 0, 1 or 2, Rⁱ represents a hydrogen atom or an alkyl group having 1 - 4 carbon atoms, and M represents a hydrogen atom, an alkali metal, an alkaline earth metal or an ammonium ion,
   and wherein the repeating units A and B in the PCE have a molar ratio of A : B in the range of 10 : 90 - 90 :10.

Preferably, PCE of the present invention consist to at least 50 mol%, more preferably at least 75 mol%, especially at least 90 mol% of repeating units A and B. Repeating units A and B may be arranged randomly, alternating, block-wise or with a gradient structure.

In a preferred embodiment, R^{u} is hydrogen or a methyl group, R^{v} is hydrogen, m = 1 or 2, p = 0, X is O, R1 is -[YO]ₙ-R⁴, where Y is ethylene and R⁴ is methyl, and n = 2 - 350.

In another preferred embodiment, R^{u} is hydrogen or a methyl group, R^{v} is hydrogen, m = 0, p = 0, X is O, R1 is -[YO]ₙ-R⁴, where Y is ethylene and R⁴ is methyl, and n = 2 -350.

In another preferred embodiment, R^{u} is hydrogen, R^{v} is hydrogen, m = 1, p = 0, X is O, R1 is -[YO]ₙ-R⁴, where Y is ethylene and R⁴ is hydrogen or a methyl group, and n = 2 -350.

In another preferred embodiment, R^{u} is hydrogen, R^{v} is hydrogen, m = 1, p = 0, X is O, R1 is -[YO]ₙ-R⁴, where Y is ethylene and R⁴ is hydrogen or a methyl group, and n = 2 -350.

In another preferred embodiment, R^{u} is hydrogen, R^{v} is hydrogen, m = 0, p = 0, X is O, R1 is -(CH₂)₄-[YO]ₙ-R⁴, where Y is ethylene and R⁴ is hydrogen or a methyl group, and n = 2 - 350.

In another preferred embodiment, R^{u} is hydrogen or a methyl group, R^{v} is hydrogen, m = 0, p = 1, X is O, R1 is -[YO]ₙ-R⁴, where Y is ethylene and R⁴ is hydrogen or a methyl group, and n = 2 - 350.

PCE of the present invention can be prepared by processes of radical polymerization of suitable monomers. Suitable conditions for carrying out free radical polymerization are known to the skilled person per se and are described, for example, in EP 1103570 (Nippon Shokubai). Suitable monomers to be used in such process to yield repeating units A of the general structure (I) especially are acrylic acid and/or methacrylic acid. Suitable monomers to be used in such process to yield repeating units B of the general structure (II) especially are derived from isoprenyl alcohol, methallyl alcohol, allyl alcohol, and/or vinyl alcohol.

PCE of the present invention can be prepared by a polymer-analogous esterification reaction. Suitable processes for the preparation of PCE of the present invention by polymer-analogous esterification are known to the skilled person per se and are described, for example, in EP 1138697 (Sika AG).

Of course, mixtures of different PCE can be used in the context of the present invention, and the PCE can be in liquid and/or solid form.

According to preferred embodiments, PCE of the present invention are dosed in amounts of between 0.01 - 10 w% relative to the total dry weight of mineral binder present. This dosage range applies to the total content of PCE.

The term "copolymerized polyvinyl alcohol" within the present context relates to a polyvinyl alcohol copolymerized with monomers other than derivatives of vinyl alcohol. Especially, copolymerized polyvinyl alcohols of the present invention are polyvinyl alcohols additionally comprising monomers with carboxylate groups. Polyvinyl alcohols are well-known polymers obtainable from the polymerization of esters of vinyl alcohol, especially of vinyl acetate, and subsequent saponification to a desired degree. Preferred copolymerized polyvinyl alcohols can, for example, be obtained by copolymerization of esters of vinyl alcohol, especially of vinyl acetate, with suitable ethylenically unsaturated monomers having carboxylate groups or esterified carboxylate groups, and subsequent saponification. For example, vinyl acetate can be copolymerized with acrylic acid, methacrylic acid, maleic acid, maleic acid anhydride, fumaric acid, tiglic acid, angelic acid, itaconic acid, and/or esters of any of these acids such as for example alkyl (meth)acrylates. Other ethylenically unsaturated monomers may additionally be copolymerized, for example to add additional functionalities such as sulfate or sulfonate groups, phosphate or phosphonate groups, polyether groups, silane groups, epoxy groups, and/or amine groups. Subsequent saponification of the copolymerizate to a desired degree leads to copolymerized polyvinyl alcohols of the present invention. Suitable methods to produce copolymerized polyvinyl alcohols of the present invention by copolymerization are, for example, disclosed in WO 2020/13856, preparation examples 1- 8.

According to embodiments, copolymerized polyvinyl alcohols of the present invention thus comprise or consist of monomeric units of the general structures (III), (IV), and (V): 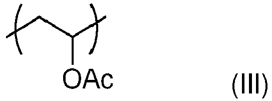 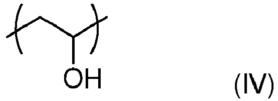 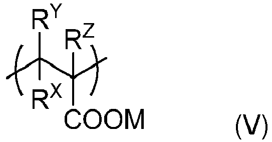 where
each R^{X} and R^{Y} independently of each other is hydrogen, a methyl group, or COOM, each R^{Z} independently of one another is hydrogen or methyl,
M represents a hydrogen atom, an alkali metal, an alkaline earth metal, an ammonium ion, or mixtures thereof, or a C₁ - C₁₆ alkyl group which can be substituted by O, N, P, S, or Si,
and where R^{X} is COOM a ring may be formed with the COOM group to form the anhydride.

Preferably, the copolymerized polyvinyl alcohols comprise or consist of (in each case relative to the total amount of monomer units present in the copolymerized polyvinyl alcohol):
(i) between 52 - 89 mol% of vinyl alcohol group containing monomers of general structure (IV),
(ii) between 10 - 47 mol% of vinyl acetate group containing monomers of general structure (III), and
(iii) between 1 - 35 mol%, preferably 1.5 - 15 mol% of carboxylate group containing monomers of general structure (V).

Other structural units may additional be present in copolymerized polyvinyl alcohols of the present invention. Such other structural units may be derived from monomers selected from ethylene, 1-butene, isobutylene, styrene, (meth)acrylamide, maleimide, silanized vinyl alcohols, and mixtures thereof. It is, however, preferred that such other structural units are present in not more than 50 mol%, preferably not more than 20 mol%, more preferably not more than 5 mol%, relative to the total amount of monomer units present in the copolymerized polyvinyl alcohol. It is especially preferred, that copolymerized polyvinyl alcohols are essentially free of structural units other than of the general type (III), (IV), and (V). Essentially free meaning that such other structural units are present in not more than 0.01 mol%, relative to the total amount of monomer units present in the copolymerized polyvinyl alcohol.

The incorporation of different monomers into the polymer chain of the copolymerized polyvinyl alcohol can make it possible to optimize the adsorption characteristics thereof on clay minerals, especially on swelling clays. It may thus be possible to further optimize the copolymerized polyvinyl alcohols for clay mitigation.

The molar ratio of monomeric units in copolymerized polyvinyl alcohols can be adjusted by the monomer ratio used in a copolymerization reaction to produce such copolymerized polyvinyl alcohols. The molar ratio of monomeric units in copolymerized polyvinyl alcohols can be determined by known techniques, for example by nuclear magnetic resonance (NMR) and/or acid-base titration.

The degree of saponification of a copolymerized polyvinyl alcohol of the present invention is not particularly limited. According to embodiments, the degree of saponification is 30% or more, preferably 60% or more, more preferably 70% or more, especially between 70 - 95%.

The polymerization degree of a copolymerized polyvinyl alcohol of the present invention is not particularly limited. The polymerization degree is the average number of monomeric units polymerized into one chain of copolymerized polyvinyl alcohol. According to embodiments, the polymerization degree of the copolymerized polyvinyl alcohol is between 2 - 20000, preferably between 100 - 10000, more preferably between 200 - 4000, still more preferably between 400 - 3000, in particular 750 - 1500.

According to particularly preferred embodiments, a copolymerized polyvinyl alcohol of the present invention has a polymerization degree of between 2 - 20000, preferably between 100 - 10000, more preferably between 200 - 4000, still more preferably between 400 - 3000, in particular 750 - 1500, and has a degree of saponification of between 70 and 95 %.

A copolymerized polyvinyl alcohol of the present invention may be used in liquid form, in form of a solution in water, or in powder form. If present in powder form, the average particle size preferably is between 10 - 1000 µm, more preferably 50 - 500 µm, still more preferably, 80 - 300 µm.

The copolymerized polyvinyl alcohol of the present invention is essentially free of monomeric units carrying cationic charges. Essentially free means that the molar ratio of any monomers carrying cationic charges relative to all monomeric units in the copolymerized polyvinyl alcohol is not higher than 1 mol%, preferably not higher than 0.5 w%, more preferably not higher than 0.1 w%.

Copolymerized polyvinyl alcohols according to the present invention are for example available under the brand name Poval^{™} K-series or SD-series from the company Kuraray.

According to embodiments the copolymerized polyvinyl alcohol is added to the mineral construction composition in an amount of between 0.0001 - 15 w%, preferably 0.001 - 7.5 w%, preferably 0.01 - 5 w%, more preferably 0.01 - 3 w%, in each case relative to the total dry weight of mineral binder. The mineral binder preferably being calcium sulfate or cement as described above.

According to particularly preferred embodiments of the present invention, the dispersant, especially the polycarboxylate ether or ester, is added between 0.01 - 10 w%, preferably 0.1 - 5 w%, especially 0.1 - 1 w% and the copolymerized polyvinyl alcohol is added between 0.001 - 1 w%, preferably 0.007 - 0.5 w%, especially 0.01 - 0.2 w%, in each case relative to the total dry weight of the mineral binder.

The copolymerized polyvinyl alcohol may be added together with any component of the mineral construction material. It may be added together with the mineral binder, the aggregates, the fillers, the dispersant, the clay minerals, the mixing water, or in an extra step. It can be preferable to add the copolymerized polyvinyl alcohol together with the clay minerals, especially the swelling clays, or with any material, e.g. aggregate, comprising the clay mineral. It can also be preferable to add the copolymerized polyvinyl alcohol in several additions. This means that the whole amount of copolymerized polyvinyl alcohol may be added in several portions, for example together with different other constituents of the mineral construction material.

In a further aspect, the present invention also relates to an admixture for mineral construction materials comprising at least one mineral binder, said admixture comprising at least one dispersant for said at least one mineral binder and a copolymerized polyvinyl alcohol. The mineral binder, the mineral binder composition, the at least one dispersant, and the copolymerized polyvinyl alcohol are as described above.

In particular, the mineral binder is based on calcium sulfate or is based on cement as described above and the at least one dispersant is a PCE as described above.

According to embodiments, an admixture of the present invention is a solution or a dispersion of at least one dispersant for a mineral binder, especially a PCE, and a copolymerized polyvinyl alcohol in water. The solids content of such a solution or dispersion may range from 5 - 95 w%. Preferably the solids content is at least 20 w%, more preferably at least 45 w%, especially at least 60 w%. It is, however, also possible for an admixture of the present invention to be essentially free of water. Essentially free here means that the content of water is below 1 w% based on the total weight of the admixture. Admixtures of the present invention in the form of aqueous solutions or dispersions may comprise further additives such as biocides and defoamers.

According to further embodiments, an admixture of the present invention is in the form of a powder. In this case the admixture preferably has a water content of below 1 w% based on the total weight of the admixture. It is possible, and typically also preferred, that an admixture of the present invention in powder form comprises further additives such as protective colloids, anti-cacking agents, free-flowing agents and antioxidants.

It is preferred that the weight ratio of dispersant, preferably of PCE, to copolymerized polyvinyl alcohol in an admixture of the present invention is between 20:1 to 1:1.

According to especially preferred embodiments, the admixture of the present invention consists of one dispersant for a mineral binder, especially a PCE, and a copolymerized polyvinyl alcohol, present in a weight ratio of between 50:1 to 1:1.

An admixture of the present invention may be a mono-component admixture. A mono-component admixture comprises all constituents within one container. An admixture of the present invention may also be a two-component or a multicomponent admixture. In a two-component admixture the constituents are stored in two spatially separate containers. The two components of a two-component admixture may be added to the mineral construction material at the same time or may be added at different points of time.

It is possible, by a method of the present invention, to mitigate the effect of clay minerals, especially of swelling clays, on mineral construction materials comprising at least one mineral binder and a dispersant for said mineral binder. Especially, the effect of clay minerals on the workability of such mineral binder compositions can be significantly reduced. Workability can, for example, be measured in terms of rheological parameters such as slump according to standard EN 12350-2, slump flow according to standard EN 12350-5, slump flow spread according to standard EN 12350-8, flow time according to standard EN 12350-9, a V funnel test according to EN 12350-9, or a J14 funnel test according to standard JSCE-F 541-1999. An especially suitable rheological parameter is the slump flow according to standard EN 12350-5. Workability can also be measured in terms of water demand of a mineral construction material. The water demand is the amount of water needed to achieve a given target level of a rheological parameter, especially flow, of a mineral construction material. It is thus possible, by a method of the present invention, to retain and/or restore workability of a mineral binder composition comprising at least one mineral binder, clay minerals, especially swelling clays, and at least one dispersant for the mineral binder.

Without wishing to be bound by theory, it is believed that copolymerized polyvinyl alcohols of the present invention are particularly suitable to intercalate swelling clays present in mineral construction materials and interact with the various surfaces thereof. Swelling clays are thus blocked an cannot interact anymore with any dispersant added to such mineral binder compositions. Thus, the positive effects of the dispersants on workability are preserved. As such, copolymerized polyvinyl alcohols act as sacrificial agents to mitigate the effect of swelling clays. The adsorption of copolymerized polyvinyl alcohols on clay minerals can, for example, be determined by TOC measurements. It is contemplated that a copolymerized polyvinyl alcohol of the present invention has preferential affinity for the clay mineral relative to the dispersant for the mineral binder, especially relative to a PCE. Therefore, a copolymerized polyvinyl alcohol is capable of being adsorbed to the clay mineral, thereby mitigating deleterious interaction with the dispersant for the mineral binder, especially with a PCE. This effect helps to improve the dose efficiency of the dispersant for the mineral binder, especially of a PCE.

A method of the present invention as described above may additionally comprise the steps of
(i) adding a pre-determined amount of water to the mineral construction material,
(ii) measuring a rheological parameter, especially the slump flow, of the mix obtained in step (i),
(iii) subtracting a pre-set target value of the same rheological parameter, especially the slump flow, from the measured result of step (ii),
(iv) where the result obtained in step (iii) is a negative number, increasing the dosage of copolymerized polyvinyl alcohol added to the mineral construction material, and
(v) repeating steps (i) - (iv) until a positive number results in step (iii).

A method of the present invention comprising the additional steps (i) - (v) as described above leads to particular effective mitigation of the negative effects of clay minerals, especially swelling clays, in mineral construction materials. Especially, by such method, it is possible to find the most efficient dosage of copolymerized polyvinyl alcohol to mitigate the effects of clay minerals, especially swelling clays, on workability of mineral construction materials.

In another aspect the present invention also relates to a mineral construction material comprising (based on the total dry weight of the mineral construction material unless otherwise noted)
a) 5 - 95 w% of at least one mineral binder
b) 0.001 - 25 w% of clay minerals, especially swelling clays,
c) 0.01 - 10 w%, preferably 0.1 - 5 w%, especially 0.1 - 1 w%, based on the total dry weight of the at least one mineral binder, of at least one dispersant for the mineral binder, especially a polycarboxylate ether or ester,
d) 0.001 - 1 w%, preferably 0.007 - 0.5 w%, especially 0.01 - 0.2 w%, based on the total dry weight of the at least one mineral binder, of a copolymerized polyvinyl alcohol,
e) optionally 4 - 90 w% of aggregates and/or fillers, and
f) optionally further additives different from b) - e).

All definitions and embodiments as outlined above also apply to this aspect.

Aggregates can be any aggregates typically used for mineral construction materials. Especially, aggregates can be sand, gravel, crushed rock, soil, bio-based aggregate, and/or mineral residue from industrial process such as slag. Fillers can be any fillers typically used for mineral construction materials. Especially, fillers can be rock flour, most preferably fillers are fine calcium carbonate. Further additives can especially be accelerators, retarders, plasticizers, surfactants, defoamers, thickeners, water retention agents, corrosion inhibitors, expansion agents, shrinkage reducers, pigments, air entrainers, hydrophobing agent, and/or biocides, provided that they are chemically different from any of clay minerals, dispersants for mineral binders, copolymerized polyvinyl alcohol, aggregates, and fillers as described before.

According to preferred embodiments, a mineral construction material of the present invention is essentially free of any of organic cations, especially phosphonium, pyridinium, sulfonium, (poly)quaternary ammonium, and amine oxide cations, as well as essentially free of crown ethers, polyvinyl alcohol that is not copolymerized, and/or poly(meth)acrylic acid. According to preferred embodiments, a mineral construction material of the present invention is essentially free of organic molecules with a cationic charge density higher than 0.5 meq/g. Essentially free in this context means that the respective compounds are contained in not more than 1 w%, preferably not more than 0.1 w% relative to the total dry weight of the mineral construction material.

The cationic charge density can be measured by titration as described in the examples section of EP 2542511.

According to embodiments in a mineral construction material of the present invention the at least one mineral binder is selected from calcium sulfate, cement, or mixtures thereof.

According to embodiments in a mineral construction material of the present invention the copolymerized polyvinyl alcohol has a polymerization degree of between 2 - 20000, preferably between 100 - 10000, more preferably between 200 - 4000, still more preferably between 400 - 3000, in particular 750 - 1500, and has a degree of saponification of between 70 and 95 %

In yet another aspect the present invention refers to a mineral construction material as described above and further comprising water.

The amount of water comprised may vary in a wide range depending on the intended workability of the mineral construction material. Generally, a larger amount of water will lead to a more liquid mineral construction material. Suitable amounts of water are such that a weight ratio of water to dry powder between 0.1 - 10, preferably 0.2 - 5, more preferably 0.3 - 2 results.

All definitions and embodiments as outlined above also apply to this aspect.

In a last aspect, the present invention relates to a hardened body obtained by hardening a mineral construction material as described above.

A hardened body can, for example, be a piece of concrete, a piece of gypsum, a brick, a panel, a plaster, a render, a coating, a joint, a part of a building or a building.

The following examples serve to illustrate the invention without limiting its scope.

### Examples

The following table 1 shows an overview of chemicals used.

**Table 1: chemicals used**

| | |
|---|---|
| CaSO₄ | Natural β-hemihydrate supplied by St. Gobain |
| Ca(OH)₂ | 95% supplied by Sigma Aldrich |
| Cement | CEM I 52.5 N (Milke Classic) |
| Sand | CEN sand acc. DIN EN 196-1 |
| PVA | Comparative Polyvinylalcohol; |
| | Polymerization degree appr. 1200; |
| | Degree of saponification 87 - 90 %; |
| | pH in water: 7 |
| c-PVA | Copolymerizate of vinylalcohol and 0.5 - 5 mol% carboxylated monomer; |
| | Polymerization degree: 750 - 2000; |
| | Degree of saponification: 83 - 88 %; |
| | pH in water: 5 - 7 |
| PEG | Polyethylene glycol (molecular mass 1000 g/mol) |
| Bentonite | Sodium form, swelling volume: 44 mL (2g in 100 mL water); supplied by ThermoFischer |
| Dispersant type 1 | Ethacryl M; polycarboxylate ether; supplied by Coatex |
| Dispersant type 2 | Polycarboxylate ester based on poly(meth)acrylate backbone with polyether side chain (molar ratio of carboxylate group: side chain is appr. 12) |
| Dispersant type 3 | Polycarboxylate ester based on poly(meth)acrylate backbone with polyether side chain (molar ratio of carboxylate group: side chain is appr. 4.5) |

Slump flow was measured in accordance with standard EN 12350-5 with the only exception that a cone with 50 mm diameter at the bottom was used.

### Example 1

For examples 1-1 to 1-16 200 g of CaSO₄ which contained 2 w% of Ca(OH)₂ were mixed with the amount of bentonite indicated in tables 2 - 3. This mass was sprinkled into 138 g of water within 15 sec and then left to stand for 15 sec. The type and amount of dispersant indicated in below tables 2 - 3 and the type and amount of polyvinyl alcohol as indicated in below tables 2 - 3 were added and the mix was vigorously stirred for 30 sec. The slump was measured directly after mixing.

Examples 1-2, 1-4, 1-8, 1-9, 1-14, and 1-16 are according to the present invention, examples 1-1, 1-3 as well as 1-5 to 1-7, 1-10 to 1-13 and 1-15 are comparative examples not according to the invention.

**Table 2: examples 1-1 to 1-9**

| **Example** | **1-1** | **1-2** | **1-3** | **1-4** | **1-5** | **1-6** | **1-7** | **1-8** | **1-9** |
|---|---|---|---|---|---|---|---|---|---|
| Bentonite [g] | 0 | 0 | 2 | 2 | 0 | 2 | 2 | 2 | 2 |
| Dispersant (type) | | | | | 2 | 2 | 2 | 2 | 2 |
| Dispersant [g] | 0 | 0 | 0 | 0 | 0.08 | 0.08 | 0.16 | 0.08 | 0.08 |
| PVA (type) | | c-PVA | | c-PVA | | | | c-PVA | c-PVA |
| PVA [g] | 0 | 0.2 | 0 | 0.2 | 0 | 0 | 0 | 0.1 | 0.2 |
| Slump flow [mm] | 167 | 176 | 162 | 157 | 201 | 163 | 204 | 179 | 189 |

A comparison of examples 1-1 and 1-3 as well as of examples 1-2 and 1-4 shows that swelling clay in form of bentonite has a negative influence on the flow of a gypsum slurry. Example 1-2 shows that c-PVA alone does only have a very low influence on the slump of a gypsum slurry. While example 1 -4 shows that c-PVA alone cannot restore the slump when swelling clays in form of bentonite are present. Example 1-5 shows that a PCE-type plasticizer increases the slump of the gypsum slurry. Example 1-6 shows that the slump of a gypsum slurry is decreased when swelling clays in form of bentonite are present, also if PCE-type polymers are present. Example 1-7 shows that the slump can be restored in case bentonite is present if additional PCE-type polymer is added. Examples 1-8 and 1-9 show that the slump of a gypsum slurry comprising bentonite can also be restored by the addition of c-PVA without increase of the dosage of PCE-type polymers.

Thus, the copolymerized polyvinyl alcohol and the PCE-type polymer act synergistically to increase the flow of a gypsum slurry comprising bentonites.

**Table 3: examples 1-10 to 1-16**

| **Example** | **1-10** | **1-11** | **1-12** | **1-13** | **1-14** | **1-15** | **1-16** |
|---|---|---|---|---|---|---|---|
| Bentonite [g] | 2.25 | 2.25 | 2.25 | 2.25 | 2.25 | 2.25 | 2.25 |
| Dispersant (type) | | 1 | 1 | 1 | 1 | 1 | 1 |
| Dispersant [g] | 0 | 0.2 | 0.4 | 0.2 | 0.2 | 0.4 | 0.4 |
| PVA (type) | | | | PVA | c-PVA | PVA | c-PVA |
| PVA [g] | 0 | 0 | 0 | 0.5 | 0.5 | 0.5 | 0.5 |
| Slump flow [mm] | 160 | 169 | 194 | 196 | 203 | 209 | 213 |

It can be seen from the results of table 3 that the addition of a PCE-type dispersant can increase the slump when swelling clays in the form of bentonite are present (cf examples 1-11 and 1-12 vs example 1-10). The combined use of PCE-type dispersant and any of PVA or c-PVA can additionally increase the slump (cf examples 1-13, 1-15 and examples 1-15, 1-16 respectively). The effect of c-PVA is slightly better than the effect of standard PVA (cf examples 1-13 and 1-14 as well as 1-15 and 1-16).

### Example 2

For examples 2-1 to 2-4 450 g of cement, 1350 g of sand, and 8.1 g of bentonite were dry mixed until visually homogeneous. Water was added in an amount to achieve a water to cement weight ratio of 0.5. The 0.72 g of dispersant 1, as well as the type and amount of polyvinyl alcohol and of further additives as indicated in below table 4 were added together with the mixing water. The mixture was mixed on a Hobart mixer for 3 minutes. The slump was measured directly after the mixing.

Example 2-4 is according to the invention. Examples 2-1 to 2-3 are comparative examples not according to the invention.

**Table 4: examples 2 - 1 to 2 - 4**

| **Example** | **2-1** | **2-2** | **2-3** | **2-4** |
|---|---|---|---|---|
| Dispersant (type) | 1 | 1 | 1 | 1 |
| PVA (type) | | | PVA | c-PVA |
| Additive (type) | | PEG | | |
| Slump flow [mm] | 189 | 203 | 205 | 209 |

It can be seen from the results of table 4 that slump of a composition having cement as the main binder and comprising swelling clays in the form of bentonite as well as a PCE-type dispersant can be increased by the additional use of polyethylene glycol, polyvinyl alcohol, or copolymerized polyvinylalcohol. The use of copolymerized polyvinylalcohol has the best synergy with a PCE-type dispersant and gives the highest increase in slump.

### Example 3

Example 3 is a test to compare the adsorption efficiency of different polymeric materials on swelling clays.

For this purpose, 30 g of washed river sand were mixed with the amount of bentonite as indicated in below table 5. 100 mL of an aqueous solution of the respective polymer indicated in below table 5 were added to this mix. The dosage of the respective polymer relative to the dry mix of sand and bentonite was always 0.1 w%. The resulting mixture was vigorously stirred for 15 min and then centrifuged (10 min at 4000 rpm). The total organic content (TOC) of the initial polymer solution as well as of the supernatant after centrifugation is measured with the device TOC-V CPN from Shimadzu. The below table 5 reports the reduction in carbon content between the initial polymer solution and the supernatant after centrifugation.

**Table 5: Polymer adsorption on bentonite (measured as carbon reduction)**

| | **2-1** | **2-2** | **2-3** |
|---|---|---|---|
| Bentonite content | 0.0 g | 0.14 g | 0.28 g |

| Carbon reduction in % | | | |
|---|---|---|---|
| c-PVA | 1.0 | 12.7 | 23.6 |
| Ground c-PVA* | 0.3 | 12.3 | 24.6 |

| | | | |
|---|---|---|---|
| * ground c-PVA was obtained from c-PVA as described in table 1 by grinding in a ball mill for 3 min at 500 rpm | | | |

It can be seen from the results of table 5 that adsorption of copolymerized polyvinyl alcohol is low on washed sand but very significant on bentonite.

### Example 4

Example 4 is a different test for the adsorption efficiency of different polymeric materials on swelling clays.

For this purpose, 30 g of washed river sand were mixed with 100 mL of an aqueous solution of the PCE-type dispersant 3 and c-PVA. The dosage of the respective polymers relative to the dry mix of sand and bentonite was always 0.1 w%. The resulting mixture was vigorously stirred for 15 min and then centrifuged (10 min at 4000 rpm). The resulting supernatant is called **S0** and was analysed by HPLC. A retention time for the c-PVA of between 3.9 - 4.3 min was determined. PCE-type polymers had a retention time of between 6 - 7 min. For the HPLC a column Inertsil from GL-Science was used (ODS 3-5 micron, 4.6 * 1500 mm UP), the liquid phase was a gradient of 100 Vol% aqueous H₂SO₄ to a mixture of 40 Vol% aqueous H₂SO₄ and 60 Vol% acrylonitrile within 10 min at appr. 1 mL/min. An LC-ELSD detector was used.

A different supernatant **S1** was prepared in the same way as **S0** with the only difference that the washed river sand was mixed with 0.28 g of bentonite prior to addition of the aqueous solution of PCE-type dispersant 3 and c-PVA.

A different supernatant **S2** was prepared in the same way as **S1,** with the only difference that first 100 ml of an aqueous solution containing only c-PVA was added to the mix of river sand and bentonite, stirred vigorously for 5 min, followed by the addition of PCE-type dispersant 3. The resulting mixture was vigorously stirred for 15 min and then centrifuged (10 min at 4000 rpm).

The following table 6 shows an overview of the results. A lower content of c-PVA is equivalent to a higher adsorption of c-PVA to particle surfaces.

**Table 6: HPLC results**

| **Analyte** | **c-PVA content (area units)** |
|---|---|
| **S0** | 23 |
| **S1** | 13 |
| **S2** | 7 |

It can be seen from the results of table 6 that the addition of first c-PVA, followed by PCE-type dispersant to a mixture of sand and bentonite leads to a particularly high adsorption of c-PVA (or lower content of c-PVA in the supernatant). The concomitant addition of c-PVA and PCE-type dispersant also leads to significant adsorption of c-PVA from the aqueous solution.

## Claims

1. A method for mitigating the effect of clay minerals in mineral construction materials, said mineral construction materials comprising at least one mineral binder, clay minerals, and at least one dispersant, said method comprising a step of adding a copolymerized polyvinyl alcohol to said mineral construction material.

2. A method as claimed in claim 1, **characterized in that** the clay minerals comprise or consist of swelling clays.

3. A method as claimed in claim 1 or 2, **characterized in that** the mineral construction material is a material comprising calcium sulfate as the main mineral binder.

4. A method as claimed in claim 1 or 2, **characterized in that** the mineral construction material is a material comprising cement as the main mineral binder.

5. A method as claimed in any of the previous claims, **characterized in that** the swelling clays consist to at least 10 w%, preferably at least 30 w%, more preferably at least 45 w%, still more preferably at least 70 w%, based on the total dry weight of the clay mineral, of montmorillonite.

6. A method as claimed in any of the previous claims, **characterized in that** the copolymerized polyvinyl alcohol has a polymerization degree of between 2 - 20000, preferably between 100 - 10000, more preferably between 200 - 4000, still more preferably between 400 - 3000, in particular 750 - 1500, and has a degree of saponification of between 70 and 95 %.

7. A method as claimed in any of the previous claims, **characterized in that** the copolymerized polyvinyl alcohol comprises or consists of monomeric units of the general structures (III), (IV), and (V): 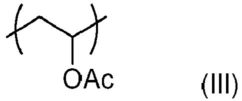 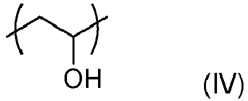 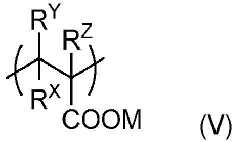 where
each R^{X} and R^{Y} independently of each other is hydrogen, a methyl group, or COOM,
each R^{Z} independently of one another is hydrogen or methyl,
M represents a hydrogen atom, an alkali metal, an alkaline earth metal, an ammonium ion, or mixtures thereof, or a C₁ - C₁₆ alkyl group which can be substituted by O, N, P, S, or Si,
and where R^{X} is COOM a ring may be formed with the COOM group to form the anhydride.

8. A method as claimed in any of the previous claims, **characterized in that** the dispersant is added between 0.01 - 10 w%, preferably 0.1 - 5 w%, especially 0.1 - 1 w% and the copolymerized polyvinyl alcohol is added between 0.001 - 1 w%, preferably 0.007 - 0.5 w%, especially 0.01 - 0.2 w%, in each case relative to the total dry weight of the mineral binder.

9. A method as claimed in any of the previous claims, **characterized in that** the at least one dispersant is selected from lignosulphonates, naphthaline sulfonates, sulfonated melamine formaldehyde resins, polyacrylates, polyarylated esters, and polycarboxylate ethers or esters, preferably, the at least one dispersant is a comb polymer of the type polycarboxylate ether or ester.

10. A method as claimed in any of the previous claims, **characterized in that** it additionally comprises the steps of
(i) adding a pre-determined amount of water to the mineral construction material,
(ii) measuring a rheological parameter, especially the slump flow, of the mix obtained in step (i),
(iii) subtracting a pre-set target value of the same rheological parameter, especially the slump flow, from the measured result of step (ii),
(iv) where the result obtained in step (iii) is a negative number, increasing the dosage of copolymerized polyvinyl alcohol added to the mineral construction material, and
(v) repeating steps (i) - (iv) until a positive number results in step (iii).

11. A mineral construction material comprising (based on the total dry weight of the mineral construction material unless otherwise noted)
a) 5 - 95 w% of at least one mineral binder
b) 0.001 - 25 w% of clay minerals, especially swelling clays,
c) 0.01 - 10 w%, preferably 0.1 - 5 w%, especially 0.1 - 1 w%, based on the total dry weight of the at least one mineral binder, of at least one dispersant for the mineral binder, especially a polycarboxylate ether or ester,
d) 0.001 - 1 w%, preferably 0.007 - 0.5 w%, especially 0.01 - 0.2 w%, based on the total dry weight of the at least one mineral binder, of a copolymerized polyvinyl alcohol,
e) optionally 4 - 90 w% of aggregates and/or fillers, and
f) optionally further additives different from b) - e).

12. A mineral construction material as claimed in claim 11, **characterized in that** the at least one mineral binder is selected from calcium sulfate, cement, or mixtures thereof.

13. A mineral construction material as claimed in any of claims 11 or 12, **characterized in that** the copolymerized polyvinyl alcohol has a polymerization degree of between 2 - 20000, preferably between 100 - 10000, more preferably between 200 - 4000, still more preferably between 400 - 3000, in particular 750 - 1500, and has a degree of saponification of between 70 and 95 %.

14. A mineral construction material as claimed in any of claims 11 - 13 further comprising water.

15. A hardened body obtained by hardening a mineral construction material as claimed in claim 14.
